# EUROPEAN PATENT APPLICATION

(11) **EP 0 870 803 A1**
(43) Date of publication of application: **14.10.1998**
(21) Application number: 98106283.9
(22) Date of filing: 06.04.1998
(51) Int. Cl.: C08L 23/04

(54) **A process to produce a crosslinked composition that comprises polymers that comprise ethylene and a crosslinked composition that comprises polymers that comprise ethylene**

(30) Priority: 07.04.1997 US 835253
(71) Applicant: PHILLIPS PETROLEUM COMPANY, Bartlesville Oklahoma (US)
(72) Inventor: Boudreaux, Edwin, Jr., Bartlesville, OK 74006 (US); Welch, Melvin Bruce, Bartlesville, OK 74006 (US); Palackal, Syriac Joseph, Bartlesville, OK 74006 (US); Cowan, Kiplin Dale, Bartlesville, OK 74006 (US)
(74) Representative: Dost, Wolfgang, Dr.rer.nat., Dipl.-Chem.

(57) **Abstract**

A process that produces a crosslinked composition is provided. This process comprises crosslinking a composition that comprises: (a) polymers that comprise ethylene; (b) an amount of crosslinking agent; and (c) an amount of crosslinking coagent. A crosslinked composition is also provided. This crosslinked composition comprises: (a) polymers that comprise ethylene; and (b) an amount of crosslinking coagent, where said crosslinking coagent has been incorporated into the molecular structures of said polymers that comprise ethylene.

## Description

### FIELD OF THE INVENTION

The invention is related to the field of processes that produce crosslinked compositions that comprise polymers that comprise ethylene. Additionally, the invention is related to the field of crosslinked compositions that comprise polymers that comprise ethylene.

### BACKGROUND OF THE INVENTION

There has been, and continues to be, considerable interest in converting thermoplastic compositions, which comprise ethylene, into thermosetting compositions, which comprise ethylene. This interest is due to the desire to combine the low cost, easy processing, and good mechanical properties of thermoplastic compositions, which comprise ethylene, with the enhanced form stability at elevated temperatures, resistance to stress crack, and good tensile properties of thermosetting compositions, which comprise ethylene.

Crosslinked compositions, which comprise ethylene, are valuable because they can be used in the wire, cable, pipe, hose, and molded article industries. Consequently, considerable research has been, and continues to be, conducted in this area, in order to discover new and improved crosslinked compositions, which comprise ethylene.

### SUMMARY OF THE INVENTION

It is an object of the invention to provide a process that produces a crosslinked composition.

It is another object of the invention to provide a crosslinked composition.

In accordance with the invention a process that produces a crosslinked composition is provided. This process comprises (or optionally consists essentially of, or consists of) crosslinking a composition that comprises: (a) polymers that comprise ethylene; (b) an amount of crosslinking agent; and (c) an amount of crosslinking coagent.

In accordance with the invention a crosslinked composition is provided. This crosslinked composition comprises (or optionally consist essentially of, or consist of): (a) polymers that comprise ethylene; and (b) an amount of crosslinking coagent, where said crosslinking coagent has been incorporated into the molecular structures of said polymers that comprise ethylene.

These and other objects of the invention will be apparent from that which follows.

### DETAILED DESCRIPTION OF THE INVENTION

The polymers used in the invention comprise ethylene, either alone or in combination with comonomers. The comonomers can be selected from alpha-olefins having from 3 to 20 carbon atoms per molecule. For example, the comonomers can be selected from the group consisting of propylene, 1-butene, 3-methyl-1-butene, 1-pentene, 3-methyl-1-pentene, 4-methyl-1-pentene, 1-hexene, 3-ethyl-1-hexene, 1-octene, 1-decene and mixtures thereof. Additionally the polymers used in the invention have ethylene as the major component of the polymers, based on the molar ratio of components.

The polymers used in the invention have a density in the range of about 0.88 to about 0.98 grams per cubic centimeter as determined in accordance with ASTM D1505. However, it is preferred that the polymers used in the invention have a density in the range of about 0.92 to about 0.97 grams per cubic centimeter and it is most preferred if the polymers used in the invention have a density in the range of 0.93 to about 0.96 grams per cubic centimeter.

The polymers used in the invention have a melt index in the range of about 0.01 to about 1000 grams per 10 minutes as determined in accordance with ASTM D1238, Condition 190/2.16. However, it is preferred that the polymers used in the invention have a melt index of in the range of about 0.1 to about 200 grams per 10 minutes.

The polymers used in the invention are obtained by polymerising ethylene, and optionally a suitable comonomer, under particle form polymerisation conditions using a solid-metallocene-based-catalyst-system that is substantially insoluble in the polymerization diluent under such polymerization conditions.

For example, such a solid catalyst system can be obtained by:
(a) combining 5-(9-fluorenyl)-5-(cyclopentadienyl)-hexene-1 zirconium dichloride and methylaluminoxane in a liquid;
(b) prepolymerizing ethylene in the resulting liquid; and
(c) separating the resulting solid prepolymerized catalyst system from the liquid (hereafter this particular solid catalyst system shall be called 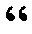 M-Catalyst 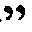 ).

The details of the preparation of such a catalyst are disclosed in U.S. Patent No. 5,498,581, the entire disclosure of which is incorporated herein by reference.

It is preferred that the liquid employed in step (a) be an organic liquid in which the methylaluminoxane is at least partially soluble. Preferably, an aromatic solvent is employed in step (a). Examples of such aromatic solvents include, but are not limited to, benzene, toluene, ethyl benzene, and diethylbenzene.

Preferably, the amount of the liquid should be sufficient as to dissolve the product of reaction between the metallocene and the aluminoxane, provide desirable polymerization viscosity for the polymerization, and to permit good mixing. During the mixing, the temperature would preferably be kept below that which would cause the metallocene to decompose. Typically, the temperature would be in the range of about -50°C to about 150°C. Preferably, the metallocene, the aluminoxane, and the liquid diluent are combined at room temperature, i.e. around 10°C to 30°C. The reaction between the aluminoxane and the metallocene is relatively rapid. The reaction rate can vary over a wide range, however, it is generally desired that they be contacted for an amount of time in the range of about 1 minute to about 1 hour. The mixture formed is usually called the liquid catalyst system.

It is also possible to carry out step (a) in the presence of a particulate solid. Any number of particulate solids can be employed. Examples include porous supports such as talc, inorganic oxides, and even particulate polyolefins. Typically, this solid would be any inorganic solid that does not interfere with the desired end results. Examples of inorganic oxide materials include metal oxides of Groups II-V, such as silica, alumina, silica-alumina, and mixtures thereof. Other examples of inorganic oxides are magnesia, titania, zirconia, and the like.

If a solid is employed, it is generally desirable for the solid to be thoroughly dehydrated prior to use. Preferably, it is dehydrated so as to contain less than 1 percent loss on ignition. Thermal dehydration may be carried out in a vacuum or while purging with a dry inert gas such as nitrogen at a temperature of about 20°C to about 1000°C and preferably from about 300°C to about 900°C. Pressure considerations are not viewed as critical. The duration of the thermal treatment can be from about 1 to about 24 hours as needed.

Dehydration can also be accomplished by subjecting the solid to a chemical treatment in order to remove water and reduce the concentration of surface hydroxyl groups. Chemical treatment is generally capable of converting the majority of the water hydroxyl groups on the oxide surface to relatively inert species. Useful chemical agents are for example, carbon monoxide, carbonyl sulfide, trimethylaluminum, ethyl magnesium chloride, chlorosilanes such as SiCl₄, disilazane, trimethylchlorosilane, dimethylaminotrimethylsilane, and the like.

The amount of aluminoxane and metallocene used in forming a liquid catalyst system for the prepolymerization can vary over a wide range. Typically, however, the molar ratio of aluminum in the slurry to the transition metal of the metallocene is in the range of about 1:1 to about 20,000:1, more preferably a molar ratio of about 10:1 to about 2,000:1 and most preferably a molar ratio of 50:1 to 500:1 is used. If a particulate solid, i.e. silica, is used, generally it is used in an amount such that the weight ratio of the metallocene to the particulate solid is in the range of about 0.00001/1 to 1/1, more preferably about 0.0005/1 to about 0.2/1 and most preferably a weight ratio of 0.005 to 0.1 is used.

The liquid catalyst system plus other components, if used, is prepolymerized. The materials that are prepolymerised maybe in the form of a solution, a slurry, or a gel, in a liquid. A wide range of olefins can be used for the polymerization. Typically, however, the prepolymerization will be conducted using an olefin, preferably selected from ethylene and non-aromatic alpha-olefins. Furthermore, a mixture of olefins, for example, ethylene and a higher alpha-olefin can be used for the prepolymerization. The use of a higher alpha-olefin, such as 1-butene, with ethylene, is believed to increase the amount of copolymerization occurring between the olefin monomer and the olefinically unsaturated portion of the metallocene.

The prepolymerization can be conducted under relatively mild conditions. Typically this would involve using low pressures of the olefin and relatively low temperatures designed to prevent sight decomposition resulting from high concentrations of localized heat. The prepolymerization typically occurs at temperatures in the range of about -15°C to about +150°C, more typically in the range of about 0°C to about +30°C. The amount of prepolymer can be varied but typically would be in the range of from about 1 to about 95 weight percent of the resulting prepolymerized solid catalyst system, still more preferably about 5 to about 80 weight percent. It is generally desirable to carry out the prepolymerization to at least a point where most, if not substantially all, of the metallocene is in the solid rather than in the liquid, since that maximizes the use of the metallocene.

Alter the prepolymerization, the resulting solid prepolymerized catalyst is separated from the liquid reaction mixture. Various techniques known in the art can be used for carrying out this step. For example, the material could be separated by filtration, decantation, or vacuum evaporation. It is currently preferred, however, not to rely upon vacuum evaporation since it is considered desirable to remove substantially all of the soluble components in the liquid reaction product of the prepolymerization from the resulting solid prepolymerized catalyst before it is stored or used for subsequent polymerization. After separating the solid from a liquid, the resulting solid is preferably washed with a hydrocarbon and dried using a high vacuum to remove substantially all the liquids or other volatile components that might still be associated with the solid. The vacuum drying is preferably carried out under relatively mild conditions, i.e. temperatures below 100°C. More typically the prepolymerized solid is dried by subjection to a high vacuum at a temperature of about 20 to about 50°C until a substantially constant weight is achieved. A preferred technique employs at least one initial wash with an aromatic hydrocarbon, such as toluene, followed by a wash with a paraffinic hydrocarbon, such as, for example, hexane, isopentane, or pentane, and then the vacuum drying.

It is also within the scope of the present invention to add a particulate solid to the liquid catalyst system after it has been formed and then to carry out the prepolymerization in the presence of that solid. Another option is to add a particulate solid of the type aforementioned alter the prepolymerization or after the solid prepolymerized catalyst system has been separated from the liquid.

This resulting solid prepolymerized catalyst system is capable of preparing polymers of ethylene having a fairly wide range of densities. Typically, in preparing the lower density versions, the ethylene is polymerized in combination with a smaller amount, generally no more than 20 mole percent, of at least one other alpha-olefin having 3 or more carbon atoms, more generally containing about 4 to about 10 carbon atoms, examples of which include aliphatic hydrocarbons such as butene-1, pentene-1, hexene-1, 4-methylpentene-1, octene-1, and the like. The solid prepolymerized catalyst system can be employed using slurry polymerization conditions. Typically the polymerization temperature would be selected so as to provide slurry polymerization conditions in the particular liquid diluent selected. Typically the temperature would be in the range of about 20°C to about 160°C. With isobutane as the liquid diluent, temperatures in the range of about 50°C to about 110°C have been found desirable.

When the polymerization is carried out in a continuous loop slurry process, it is generally desirable to include in the reaction mixture a small amount of an antistatic agent. An example of such an antistatic agent is the material sold by Octyl America, Inc. under the trade name Stadis 450.

In this specification, the phrase "polymers that comprise ethylene" and the terms 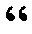 M-Polymer 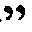 and 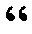 M-Polymers 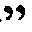 shall mean a polymer or polymers that have been produced using a catalyst, where said catalyst has been disclosed, and the method for producing said catalyst has been claimed, in U.S. Patent No. 5,498,581 entitled 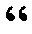 **METHOD FOR MAKING AND USING A SUPPORTED METALLOCENE CATALYST SYSTEM** 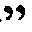 which was filed June 1, 1994 and which issued March 12, 1996.

The crosslinking agent used in the invention can be any suitable compound used for crosslinking polymers. However, it is preferred if the crosslinking agent is an organic peroxide. For example, diperoxy compounds can be employed as crosslinking agents. Examples of diperoxy compounds suitable for use as crosslinking agents include acetylenic diperoxy compounds such as hexynes having the formula 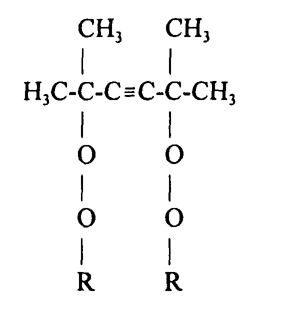 octynes having the formula 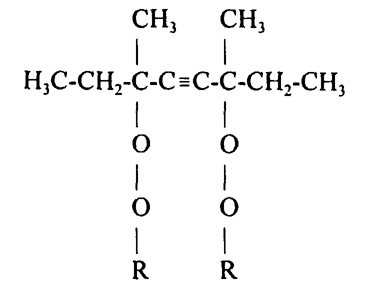 and octadiynes having the formula 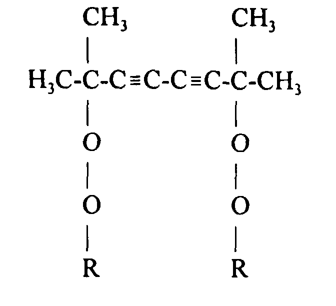 wherein R is selected from the group consisting of tertiary alkyl, alkyl carbonate, and benzoate. The molecular weights of these compounds are generally in the range of from about 200 to about 600. Examples of acetylenic diperoxy compounds described above include:
2,7-dimethyl-1,7-di(t-butylperoxy)octadiyne-3,5;
2,7-dimethyl-2,7-di(peroxy ethyl carbonate) octadiyne-3,5;
3,6-dimethyl-2,6-di(peroxy ethyl carbonate) octyne-4;
3,6-dimethyl-2,6-di(t-butylperoxy)octyne-4;
2,5-dimethyl 2,5-di(peroxybenzoate) hexyne-3;
2,5-dimethyl-2,5-di(peroxy-n-propyl carbonate)hexyne-3;
2,5-dimethyl-2,5-di(peroxy isobutyl carbonate)hexyne-3;
2,5-dimethyl-2,5-di(alpha-cumyl peroxy) hexyne-3;
2,5-dimethyl-2,5-di(peroxy ethyl carbonate) hexyne-3;
2,5-dimethyl-2,5-di(peroxy beta-chloroethyl carbonate) hexyne-3;
   and
2,5-dimethyl-2,5-di(t-butylperoxy)hexyne-3.

Other diperoxy compounds suitable for use as a crosslinking agent include hexanes having the formula 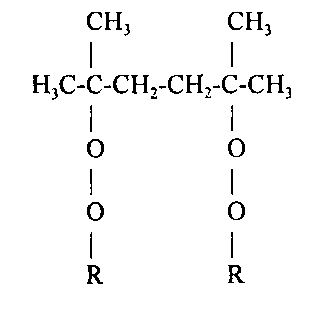 and octanes having the formula 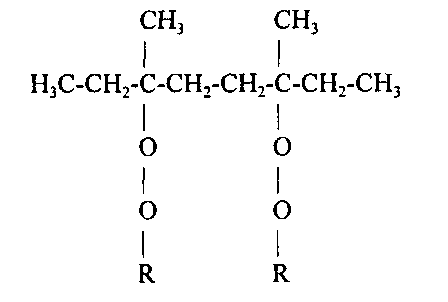 wherein R is selected from the group consisting of tertiary alkyl, alkyl carbonate, and benzoate. The molecular weights of the compounds are generally in the range of from about 200 to about 600. Examples of diperoxy compounds described above include:
3,6-dimethyl-2,6-di(t-butylperoxy) octane;
3,6-dimethyl-2,6-di(peroxy ethyl carbonate) octane;
2,5-dimethyl-2,5-di(peroxybenzoate) hexane;
2,5-dimethyl-2,5-di(peroxy isobutyl carbonate) hexane; and
2,5-dimethyl-2,5-di(t-butylperoxy) hexane.

Preferably, the diperoxy compound employed as a crosslinking agent of the composition of the present invention is selected from the group consisting of 2,5-dimethyl-2,5-di(t-butylperoxy)hexyne-3 and 2,5-dimethyl-2,5-di(t-butylperoxy) hexane. Other suitable examples of crosslinking agents are disclosed in U.S. Patents 3,214,422 and 4,440,893; the entire disclosures of which are hereby incorporated by reference.

The amount of crosslinking agent used is in the range of from about 0.05 weight percent to about 3 weight percent based on the weight of the polymer component of the composition. Preferably, the amount of crosslinking agent used is in the range of from about 0.05 weight percent to about 1.5 weight percent based on the weight of the polymer component of the composition.

However, it should be noted that the amount of "active oxygen" in a crosslinking agent can significantly affect the above weight percents. The term "active oxygen" is well known in the art. In general, it means the active (-O-O-) bonds in a molecule. The amount of active oxygen that should be present in the composition is from about 50 to about 3000 parts per million by weight based on the weight of the polymer component of the composition. Preferably, the amount of active oxygen that should be present in the composition is from about 50 to about 1500 parts per million by weight based on the weight of the polymer component of the composition.

The crosslinking coagent used in the invention is incorporated into molecular structure of the polymer component of the composition. The coagent is selected from the group consisting of organic compounds that have allyl (CH₂-CH=CH₂) groups, 1,2 polybutadiene and mixtures thereof. The coagent can be selected from the group consisting of compounds having three allyl groups, such as, for example, triallyl cyanurate, triallyl isocyanurate, triallyl trimellitate and trimethallyl trimellitate. Preferably, the crosslinking coagent has one of the following general formulas 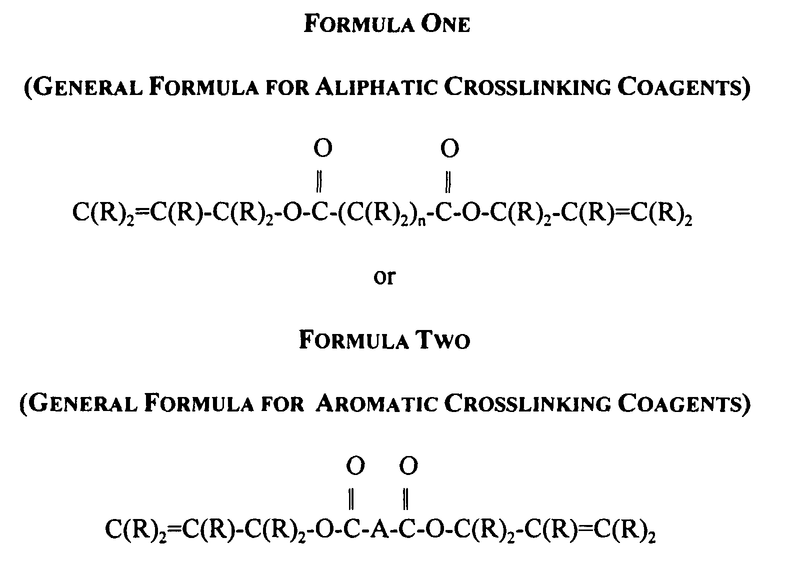 where A is an aromatic radical; R is hydrogen or alkyl, and n is an integer from 0 to 20. Examples of such compounds are diallylterephthalate and diallylsebacate. It is preferred if such compounds have a boiling point greater than about 150°C under a pressure of about 1-10 mm of mercury.

The amount of crosslinking coagent used is in the range of from about 0.05 weight percent to about 3 weight percent based on the weight of the polymer component of the composition. Preferably, the amount of crosslinking agent used is in the range of from about 0.05 weight percent to about 1.5 weight percent based on the weight of the polymer component of the composition. However, more preferably, the amount of crosslinking coagent used is in the range of about 0.1 to about 1.5 and even more preferably the amount used is in the range of about 0.25 to about 1.5 based on the weight of the polymer component of the composition. However, even more preferably, the amount of crosslinking coagent used is in the range of about 0.55 to about 0.95 and most preferably the amount used is in the range of about 0.65 to about 0.85 based on the weight of the polymer component of the composition.

The crosslinked composition preferably contains hydroperoxide scavengers examples of which are those compounds comprising one or more thioester groups. Examples of compounds having a thioester group include dilauryl thiodipropionate and distearyl thiodipropionate. Further examples of such compounds can be found in U.S. patent 4,028,332, the entire disclosure of which is hereby incorporated by reference.

An antioxidant can be employed in an amount in the range of about 0.01 weight percent to about 1 weight percent, more preferably in the range of about 0.05 to about 0.5 weight percent based on the weight of the polymer component of the composition. Even more preferably, the antioxidant is used in an amount in the range of from 0.1 weight percent to 0.3 weight percent based on the weight of the polymer component of the composition.

If desired, an antioxidant such as a hindered phenolic antioxidant can be employed to reduce oxidation. Examples of these antioxidants include
2,6-di-t-butyl-p-cresol (BHT);
tetrakis(methylene(3,5-di-t-butyl-4-hydroxyhydrocinnamate)) methane (IRGANOX 1010); and
octadecyl-3,5-di-t-butyl-4-hydroxyhydrocinnamate (IRGANOX 1076).

When employed, these antioxidants are used in an amount in the range of from about 0.01 weight percent to about 0.05 weight percent, more preferably in the range of from 0.01 weight percent to 0.03 weight percent, based on the weight of the polymer component of the composition.

The use of the crosslinking coagent in the cross!inked composition tends to make the molded parts stick to the mold. If the degree of adhesion is too great, the parts will be difficult to remove from the mold and may be damaged during extraction. On the other hand, if the degree of adhesion is too low, the parts may separate from the mold prematurely during the molding cycle, resulting in the formation of gas pockets between the parts and the mold. Gas pockets between the parts and the mold typically result in the formation of crater-like defects or "pock marks" on the outside surfaces of the parts. Consequently, a mold release agent is typically used. Preferably, the mold release agent employed is a fatty acid. Fatty acids can be saturated or unsaturated, but saturated fatty acids are preferred. In general, saturated fatty acids have the formula CH₃(CH₂)ₓCOOH where "X" is an integer from 2 to 24. Examples of saturated fatty acids are butyric, lauric, palmitic and stearic. Examples of unsaturated fatty acids are oleic, linoleic, and linolenic. A preferred fatty acid is stearic acid.

The mold release agent is preferably used in an amount in the range of from about 0.05 weight percent to about 1 weight percent, more preferably in the range of from about 0.1 to about 0.5% , based on the weight of the polymer component of the composition. Most preferably, the mold release agent is used in an amount in the range of from about 0.1% to about 0.2% based on the weight of the polymer component of the composition.

If desired, other components which do not adversely affect the crosslinking of the polymer can be employed in the composition of the present invention. Examples of such components include corrosion inhibitors (such as, for example, calcium stearate and zinc stearate), pigments, additional stabilizers such as metal complexing agent, antistatic agents, ultraviolet absorbers for light stabilization, carbon black, fillers, reinforcing materials and the like. These components can be used in the range from about 0.01 to about 10 weight percent based on the weight of the polymer component of the composition. Minor amount of impurities may be present provided they do not affect any of the physical properties of the crosslinked composition by more than ± 5 percent. Usually such impurities are individually less than 0.1 weight percent of the polymer component of the composition.

The crosslinked composition of the present invention can be formed by a variety of techniques. For example, it can be compounded into pellets and fed, along with the other compounds, into an extruder having either a single mixing screw or twin mixing screws. The pellets thus produced may be ground and used in powder form.

The crosslinked compositions have properties that are very unexpected and extremely valuable. In particular, the tests that indicate the overall toughness of the crosslinked composition disclose properties values that are up to 380 percent better than comparable commercial crosslinked compositions. This is very unexpected and very valuable, in part, due to the low levels of crosslinking coagent needed to produce these results. In general, the crosslinking coagent uses it's double bonds to form bonds with the polymers in the composition, thereby forming an interconnected association with the polymers in the composition.

A further understanding of the present invention and its advantages will be provided by the following examples.

### EXAMPLES

### Example One

### Preparation of Silica for Use as a Particulate Solid

About 733 grams of Davison Silica (952X1836) was subjected to a temperature of about 800°C for about 14 hours. This silica was then deposited into a 5L jacketed flask. The flask was then evacuated and purged with nitrogen three times. About 3.8 liters of pentane was then added to the flask. The flask was then stirred while being cooled to 0°C. About 800mL of trimethylaluminum (2M in hexane) was added to the flask over about a 15 minute period. After about 2.25 hours of additional stirring, during which the flask was allowed to warm up to room temperature (about 20°C), the mixture in the flask was transferred to a fritted flask. About 1.5 L of hexane was added to the fritted flask followed by stirring for about 15 minutes. The solids were then subjected to drying under a membrane pump for several hours followed by drying under a high vacuum for several hours.

### EXAMPLE TWO

### PREPARATION OF AN ANTISTATIC AGENT

An antistatic agent from DuPont Chemical Co. under the trade name Stadis 450 was selected for use. This antistatic agent was treated as follows.

About 25 mL of the agent was vacuum dried and then 30 mL of hexane was added to the dried agent. This mixture was then heated and stirred until all of the agent dissolved. The resulting mixture was then allowed to cool to room temperature (about 20°C) and then sufficient hexane was added to bring the liquid level up to 25 mL.

### EXAMPLE THREE

### PREPARATION OF A CATALYST AND A POLYMER THEREFROM

About three grams of 5-(9-fluorenyl)-5-(cyclopentadienyl)-hexene-1 zirconium dichloride was added to a 1 L flask. Afier this, about 750 mL of a 10 weight percent solution of methyl aluminoxane was added to the flask to form a liquid catalyst system (hereafter 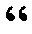 first mixture 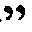 ).

About two liters of hexane was added to a 5 L jacketed flask. After this, about 250 grams of the silica prepared in Example One was added to the flask. While stirring, about 150 mL of a 10 weight percent solution of methyl aluminoxane was added to the flask, followed by stirring the mixture for about 30 minutes. This formed a second mixture.

The first mixture and the second mixture were then contacted together to form a third mixture. This third mixture was then cooled to 0°C and contacted with ethylene, which was at about 5 psig. After prepolymerizing for about two hours, the prepolymerization was stopped and the prepolymerization mixture was dumped to a fritted flask. The solids were filtered and washed with 1 L of toluene and then 1 L of hexane to obtain a first product.

Alter drying the first product overnight in a high vacuum, the dried, first product was placed in a 5 L jacketed flask. Three liters of hexane were then added to the flask. After this, the mixture was stirred, cooled to 0°C, and then contacted with ethylene at 5 psig for about 4 hours. The resulting second product was dumped to a fritted flask, filtered to dryness, and then placed on a membrane pump for several hours, and then under high vacuum for several hours, to obtain a desired catalyst system.

The desired catalyst system was then sieved through a forty mesh screen and then separated into two portions.

About 250 grams of the first portion was added to a large beaker. About 375 grams of polyethylene, which had been sieved through a 100 mesh screen and which had been pressurized and depressurized six times with nitrogen, was also added to the beaker. The contents of the beaker were then mixed together. About 1.5 L of n-hexane was then added to the beaker and the contents were slurried. Next, 0.81 mL of the antistatic agent prepared in Example Two, and the contents of the beaker were added to another container and then the container was stored in a dry box.

About 200 grams of the second portion was added to a large beaker. About 300 grams of polyethylene, which had been sieved through a 100 mesh screen and which had been pressurized and depressurized six times with nitrogen, was also added to the beaker. The contents of the beaker were then mixed together. About 1.5 L of n-hexane was then added to the beaker and then contents were slurried. Next, 0.5 mL of the antistatic agent prepared in Example Two, and the contents of the beaker were added to another container and then the container was stored in a dry box.

It should be noted that the addition of polyethylene, and antistatic agent, to the beaker helps to promote catalyst feeding to the reactor during polymerization. However, they are not necessarily needed.

The polymerization was conducted in a 26 gal. reactor under conditions which included:
1. a temperature of 210°F;
2. a pressure of 590 psig;
3. ethylene concentration of 9 mole percent;
4. a hydrogen/ethylene molar ratio of 0.0045;
5. in the presence of triethylaluminum at 4.4 parts per million based on the weight of isobutane diluent; and
6. in the presence of antistatic agent at 5.2 parts per million based on the weight of isobutane diluent.

The reactor residence time was 1.11 hours. The feed rate for the isobutane diluent was 60.9 lb/hr and the feed rate for the ethylene monomer was 27.3 lb/hr. This produced a composition that comprises several polymers that comprise ethylene where said polymers are of various molecular chain lengths. The composition had a melt index of 18.4 grams per 10 minutes and a density of 0.9556 grams per cubic centimeter.

### EXAMPLE FOUR

### PREPARATION OF CROSSLINKED COMPOSITIONS

Using the polymer produced in example three, samples were prepared by compounding the polymer with the following crosslinking agent and additive package.

| COMPOUNDING TABLE | |
|---|---|
| ITEM | WEIGHT PERCENT |
| ANTIOXIDANT¹ | 0.02 |
| ANTIOXIDANT² | 0.30 |
| ULTRAVIOLET LIGHT STABILIZER³ | 0.50 |
| MOLD RELEASE AGENT⁴ | 0.10 |
| CROSSLINKING AGENT⁵ | 0.70 |

| | |
|---|---|
| ¹ Octadecyl 3-(3,5-di-t-butyl-4-hydroxy phenyl)propionate. Also known as Octadecyl 3,5-di-t-butyl-4-hydroxyhydrocinnamate according to the 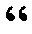 Index of Commercial Antioxidants & Antiozonants 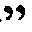 Fourth Edition, page 50, (1983), published by The Goodyear Tire and Rubber Company. Also known as Octadecyl 3,5-bis (1,1-dimethyl ethyl)-4-hydroxybenzene propanoate according to CAS. | |
| ² Dilauryl thiodipropionate. Also known as Didodecyl 3,3'-thiopropionate according to the 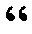 Index of Commercial Antioxidants & Antiozonants 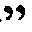 Fourth Edition, page 43, (1983), published by The Goodyear Tire and Rubber Company. | |
| ³ 2-hydroxy-4-ocryloxybenzophenone. See 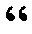 Plastics Additives and Modifiers Handbook 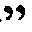 , page 232, (1992), published by Van Nostrand Reinhold. | |
| ⁴ N-octadecanoic acid. See 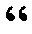 Hawley's CONDENSED CHEMICAL DICTIONARY 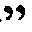 Eleventh Edition, pages 1091-1092, (1987), published by Van Nostrand Reinhold. | |
| ⁵ 2,5 dimethyl 2,5 bis (t-butyl peroxy)hexyne-3. See 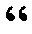 General Catalog: Peroxides & Specialty Chemicals 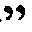 published by Elf Atochem North America, Inc., Bulletin Q1018-1M-1/96. | |

In general, the samples were prepared by first separating the polymer component into two parts. In one part, the items in the Compounding Table were dispersed therein. In the other part, the crosslinking coagent was dispersed therein. The two parts were then combined and blended in a Henschel mixer (3400 setting for 30 seconds).

The mixture was then extruded using the following conditions.

| EXTRUSION CONDITIONS TABLE | | | | | | | |
|---|---|---|---|---|---|---|---|
| EXTRUDER: C.W. BRABENDER | SCREW DESIGN: STANDARD TWIN SCREW | SCREW RPM: 10 | | | | | |
| TEMPERATURE PROFILE | ZONE | 1 | 2 | 3 | 4 | 5 | 6 |
| | TEMPERATURE | 150° C | NA | NA | NA | NA | NA |
| FEEDER: K-TRON T20 | FEEDER SCREW: TWIN SCREW, SOLID | FEEDER RPM: 200 | | | | | |
| PELLETIZER RPM 19.5 | | | | | | | |

Samples were then compression molded using the following conditions.

| COMPRESSION MOLDING CONDITIONS | | | |
|---|---|---|---|
| PRESS | PASADENA | PREHEAT TIME | 1 MIN. |
| TEMPERATURE | 450°F | PRESSURIZATION TIME | 1 MIN. |
| CLAMP PRESSURE | 30 KSI | HOLD TIME | 5 MIN. |
| MOLD FRAME | 5"x5"x1/8" | COOL TIME | 1 MIN. |

The test samples were evaluated for cure characteristics using a Monsanto R-100 rheometer set at cure temperature of 400°F, an oscillating disk frequency at 100 cycles/min, and an oscillation amplitude of three degrees (For cure characteristics see for example 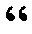 The Vanderbilt Rubber Handbook 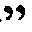 Robert V. Babbih, Editor, published by R.T. Vanderbilt Company. Inc., (1978), pages 583-591, the chapter entitled 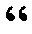 Rheometer, Curemeters and Fatigue Testing 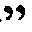 by Gary E. O'Connor. See also, U.S. patent 4,018,852 for cure characteristics, especially Figure 1, and Col. 7).

Comparison samples were prepared from a commercially available resin (HMN 55180 available from the Phillips Petroleum Company) which was produced using a titanium halide catalyst system. This composition had a melt index of 18.9 gram per 10 minutes and a density of 0.9551 grams per cubic centimeter.

Table One provides information concerning the comparative samples and the inventive samples.

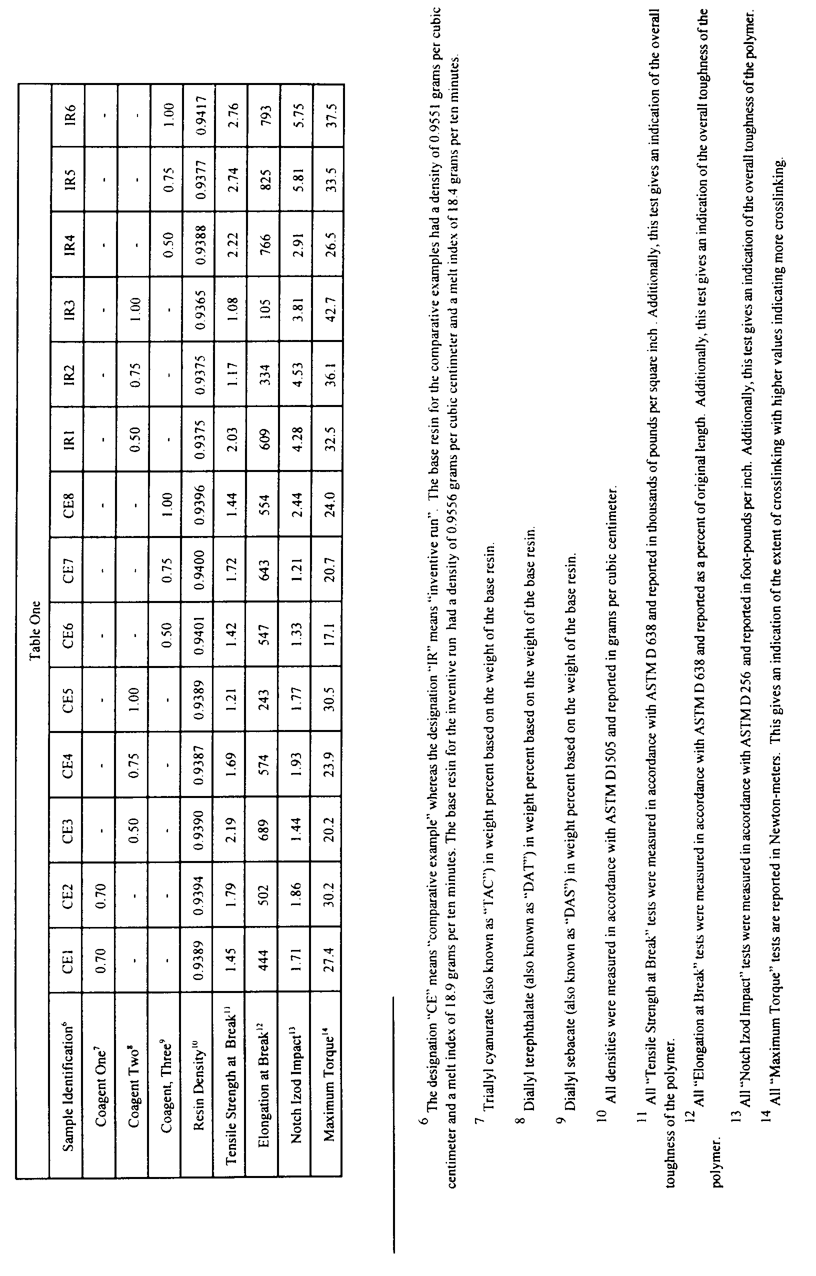

**Table Two**

| Sample Identification | CE1+CE2 Ave. | IR2 | IR3 | IR5 | IR6 |
|---|---|---|---|---|---|
| Tensile Strength at Break | 1.62±0.17 | -28 | -33 | 69 | 70 |
| Elongation at Break | 473±29 | -29 | -78 | 74 | 68 |
| Notch Izod Impact | 1.785±0.075 | 154 | 113 | 225 | 222 |
| Maximum Torque | 28.8±1.4 | 25 | 48 | 16 | 30 |

Table Two compares the average properties of comparison examples CE1 and CE2 with the properties of Inventive Runs IR 2, 3, 5, and 6. The values under the 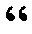 IR 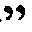 columns indicate the percent increase or decrease of that polymer's property values over the average of the properties values for CE1 and CE2. Furthermore, a comparison of the average properties of comparison examples CE1 and CE2 with Inventive Runs 2 and 5 is warranted based on equal amounts of coagent. Whereas, a comparison of the average properties of comparison examples CE1 and CE2 with Inventive Runs 3 and 6 is warranted based on equivalent amounts of coagent functionality (since TAC has three allyl groups and DAT and DAS have only two allyl groups).

As can been seen from Table Two, by comparing IR 2 and 3 with IR 5 and 6, aliphatic crosslinking coagents are better coagents than aromatic crosslinking coagents. Furthermore, in Notched Izod Impact and Maximum Torque Tests both aliphatic and aromatic coagents are better than the standard coagent TAC used in comparative base resins.

**Table Three**

| Sample Identification | CE3 | CE4 | CE5 | IR1 | IR2 | IR3 |
|---|---|---|---|---|---|---|
| Tensile Strength at Break | 2.19 | 1.69 | 1.21 | -7 | -31 | -3 |
| Elongation at Break | 689 | 574 | 243 | -12 | -42 | -57 |
| Notch Izod Impact | 1.44 | 1.93 | 1.77 | 197 | 135 | 115 |
| Maximum Torque | 20.2 | 23.9 | 30.5 | 61 | 51 | 40 |

Table Three compares the properties of comparison examples CE 3, 4, and 5 with the properties of Inventive Runs IR 1, 2, and 3. The values under the 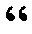 IR 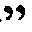 columns indicate the percent increase or decrease of that polymer's property values over the properties values for the comparative examples at the same coagent addition level.

As can been seen from Table Three, by comparing the Notched Izod Impact and Maximum Torque Tests of IR 1, 2, and 3, with the same for Comparative Examples 3, 4, and 5, the inventive run base resins, which have aromatic coagents incorporated therein, are better than the comparative examples base resins, which have the same aromatic coagents incorporated therein at the same amounts.

**Table Four**

| Sample Identification | CE6 | CE7 | CE8 | IR4 | IR5 | IR6 |
|---|---|---|---|---|---|---|
| Tensile Strength at Break | 1.42 | 1.72 | 1.44 | 56 | 59 | 92 |
| Elongation at Break | 547 | 643 | 554 | 40 | 22 | 43 |
| Notch Izod Impact | 1.33 | 1.21 | 2.44 | 119 | 380 | 136 |
| Maximum Torque | 17.1 | 20.7 | 24.0 | 55 | 62 | 56 |

Table Four compares the properties of comparison examples CE 6, 7, and 8 with the properties of Inventive Runs IR 4, 5, and 6. The values under the 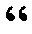 IR 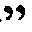 columns indicate the percent increase or decrease of that polymer's property values over the property values for the comparative examples at the same coagent addition level.

As can been seen from Table Four, the inventive run base resins, which have aliphatic coagents incorporated therein, are better than the comparative examples base resins, which have the same aliphatic coagents incorporated therein in the same amounts.

### EXAMPLE FIVE

### PREPARATION OF CROSSLINKED COMPOSITIONS

Using the polymer produced in Example Three, a sample was prepared by compounding the polymer with the crosslinking agent and additive package given above in Example Four.

The sample was prepared by first separating the polymer component into two parts. In one part, the items in the Compounding Table were dispersed therein. In the other part, the crosslinking coagent (TAC) was dispersed therein. The two parts were then combined and blended in a Henschel mixer (3400 setting for 30 seconds).

The mixture was then compounded using a Werner & Pfleider ZSK-30 twin screw extruder, at 150 RPM screw speed; 20 lbs/hr rate; and 100, 125, 125, 100, and 135°C temperature profile (Zones 1-5).

The sample was then compression molded using the following conditions.

| COMPRESSION MOLDING CONDITIONS | | | |
|---|---|---|---|
| PRESS | PASADENA | PREHEAT TIME | 1 MIN. |
| TEMPERATURE | 450°F | PRESSURIZATION TIME | 1 MIN. |
| CLAMP PRESSURE | 30 KSI | HOLD TIME | 5 MIN. |
| MOLD FRAME | 5"x 5"x1/8" | COOL TIME | 1 MIN. |

The sample was evaluated for cure characteristics using a Monsanto R-100 rheometer set at cure temperature of 400°F, an oscillating disk frequency at 100 cycles/min, and an oscillation amplitude of three degrees.

A comparison sample was prepared from a commercial available resin (HMN 55180 available from the Phillips Petroleum Company) which was produced using a titanium halide catalyst system.

Table Five provides information concerning the comparative samples arid the inventive samples.

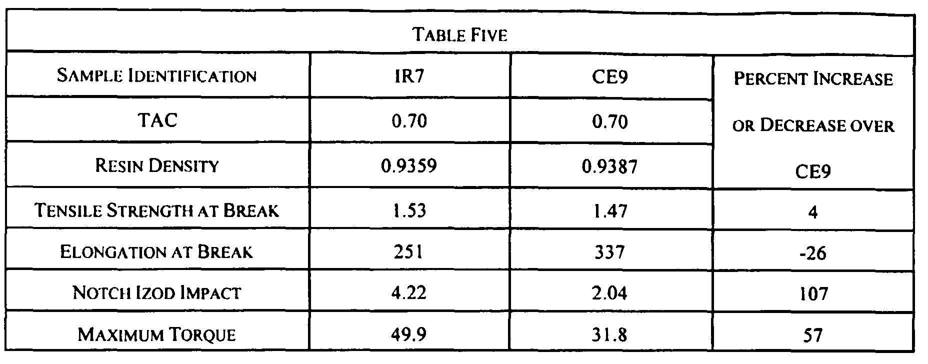

As can been seen from Table Five, by comparing the Notched Izod Impact and Maximum Torque Tests of IR 7, with the same for Comparative Example 9, the inventive run base resin are better than the comparative examples base resin.

As can been seen from all of the information given herein, crosslinked M-Polymers have better performance properties than the other polymers produced by different catalysts. Furthermore, it has been shown that TAC, DAS and DAT can function as coagents in M-Polymers. Moreover, it has been shown that DAS and DAT function better than TAC in M-Polymers, and finally, it has been shown that aliphatic coagents function better than aromatic coagents in M-Polymers.

## Claims

1. A process for preparing a crosslinlinked composition, said process comprising the step of crosslinking a composition, said composition comprising
(a) polymers comprising ethylene;
(b) a crosslinking agent; and
(c) a crosslinking coagent.

2. The process of claim 1, wherein component (a) has a density of about 0.92 to about 0.97 g/ml, preferably of 0.93 to about 0.96 g/ml.

3. The process of claim 2, wherein component (a) has a melt index of about 0.1 to about 200 g/10 min.

4. The process of claim 3, wherein component (b) is used in an amount of about 0.05 to about 1.5 wt.-%, in particular wherein component (b) is used in an amount presenting an amount of active oxygen of about 50 to about 1500 ppm by weight, the percentages being based on the weight of component (a).

5. The process of claim 4, wherein component (c) is an aliphatic or an aromatic crosslinking coagent, in particular wherein component (c) is selected from triallyl cyanurate, triallyl isocyanurate, triallyl trimellitate, trimethallyl trimellitate, and mixtures thereof.

6. The process of claim 5, wherein component (c) is used in amounts of about 0.05 to about 1.5 wt.-%, preferably about 0.1 to about 1.5 wt.-%, more preferably about 0.25 to about 1.5 wt.-%, still more preferably about 0.55 to about 0.95 wt.-%, and even still more preferably about 0.65 to about 0.85 wt.-%, all percentages being based on the weight of component (a).

7. The process of any of the preceding claims, wherein said composition consists of (other than minor impurities):
(a) M-Polymers produced by M-Catalyst;
(b) a crosslinking agent in an amount presenting an amount of free oxygen of about 50 to about 1500 ppm by weight;
(c) a crosslinking coagent in an amount of about 0.65 to about 0.85 wt.-%;
(d) octadecyl 3-(3,5-di-t-butyl-4-hydroxy phenyl)propionate;
(e) dilauryl thiodipropionate;
(f) 2-hydroxy-4-octyloxybenzophenone; and
(g) n-octadecanoic acid, said weight data being based on the weight of the M-Polymer.

8. A crosslinked composition comprising:
(a) polymers comprising ethylene; and
(b) a crosslinking coagent,
wherein said crosslinking coagent has been incorporated into the molecular structures of said polymers comprising ethylene.

9. The composition of claim 8, wherein component (a) has a density of about 0.92 to about 0.97 g/ml, preferably of 0.93 to about 0.96 g/ml.

10. The composition of claim 8 or 9, wherein component (b) is an aliphatic or an aromatic crosslinking coagent, in particular wherein component (b) is selected from triallyl cyanurate, triallyl isocyanurate, triallyl trimellitate, trimethallyl trimellitate, and mixtures thereof.

11. The composition of any of claims 8 to 10, wherein the amount of component (b) incorporated is about 0.05 to about 1.5 wt.-%, preferably about 0.1 to about 1.5 wt.-%, more preferably about 0.25 to about 1.5 wt.-%, still more preferably about 0.55 to about 0.95 wt.-%, and even still more preferably about 0.65 to about 0.85 wt.-%, all percentages being based on the weight of component (a).

12. The composition of any of claims 8 to 11, the composition consisting of (other than minor impurities):
(a) M-Polymers produced by M-Catalyst;
(b) a crosslinking coagent in an amount of about 0.65 to about 0.85 wt.-% based on the weight of the M-Polymer, wherein said crosslinking coagent has been incorporated into the molecular structures of said M-Polymers;
(c) octadecyl 3-(3,5-di-t-butyl-4-hydroxy phenyl)propionate;
(e) dilauryl thiodipropionate;
(f) 2-hydroxy-4-octyloxybenzophenone; and
(g) n-octadecanoic acid.
